# EUROPEAN PATENT APPLICATION

(11) **EP 1 903 553 A2**
(43) Date of publication of application: **26.03.2008**
(21) Application number: 07016071.8
(22) Date of filing: 16.08.2007
(51) Int. Cl.: G09G 3/36

(54) **Liquid crystal display**

(30) Priority: 19.09.2006 KR 20060090748
(71) Applicant: Samsung Electronics Co., Ltd., Yeongtong-gu Suwon-city, Gyeonggi-do 442-742 (KR)
(72) Inventor: Kim, Hun-joo, Chungcheongnam-do (KR); Ryu, Han-jin, Gyeonggi-do (KR); Choi, Seong-sik, Chungcheongnam-do (KR); Kim, Young-mi, Daegu (KR)
(74) Representative: Dr. Weitzel & Partner

(57) **Abstract**

A liquid crystal display achieving brightness uniformity, thereby reducing manufacturing costs, includes a liquid crystal panel having a first region and a second region that exhibit different brightnesses when a predetermined data voltage is applied, a memory storing a reference brightness that is to be exhibited by the liquid crystal panel when the predetermined data voltage is applied, and a brightness correction unit receiving image data corresponding to the predetermined data voltage and correcting the image data so that the first region and the second region exhibit the reference brightness.

## Description

### BACKGROUND OF THE INVENTION

### 1. Technical Field

The present disclosure relates to a liquid crystal display and, more particularly, to a liquid crystal display achieving brightness uniformity, thereby reducing manufacturing costs.

### 2. Discussion of Related Art

Generally, liquid crystal displays (LCDs) include a thin film transistor (TFT) substrate having TFTs for switching pixels, a color filter substrate having color pixels, and a liquid crystal layer interposed between the TFT substrate and the color filter substrate. Liquid crystal molecules constituting a liquid crystal layer are aligned according to an electric field generated between a TFT substrate and a color filter substrate, and a light transmissive index is changed according to the alignment of the liquid crystal molecules.

Such LCDs are classified into edge-type LCDs and direct-type LCDs according to the position of a lamp used as a light source in a backlight module.

Edge-type LCDs include at least one lamp disposed adjacent to a side surface of a light guide plate. Here, light emitted from the lamp is guided into a liquid crystal panel by the light guide plate.

Direct-type LCDs include a plurality of lamps, and a reflective plate disposed below the lamps, which focuses light emitted from the lamps onto the display unit of a liquid crystal panel in order to maximize light utilization efficiency.

In direct-type LCDs, however, the brightness of predetermined regions of a liquid crystal panel corresponding to regions where lamps are located is higher than that of other regions of the liquid crystal panel corresponding to spaces between the lamps, thereby resulting in non-uniformity in the overall brightness of the liquid crystal panel.

Meanwhile, in order to improve the display quality of LCDs, the ratio of the distance between two adjacent lamps to the distance between the lamps and a diffusion plate must be maintained at 1.7 or less. As such, in order to reduce the brightness non-uniformity across the liquid crystal panel, the distance between the lamps and diffusion plate is often increased to a predetermined distance, which may increase the overall thickness of an LCD, thereby lengthening the driving chip package connecting the printed circuit board and the liquid crystal panel, which eventually increases the manufacturing cost.

In addition, the distance between the lamps and diffusion plate may cause sagging in the diffusion plate due to its own weight. Moreover, when a liquid crystal panel is disposed on the diffusion plate, the sagging may worsen.

### SUMMARY OF THE INVENTION

Exemplary embodiments of the present invention provide a liquid crystal display achieving brightness uniformity, thereby reducing manufacturing costs.

The above and other objects of the present invention will be described in or be apparent from the following description of the exemplary embodiments.

According to an exemplary embodiment of the present invention, there is provided a liquid crystal display including a liquid crystal panel having a first region and a second region that exhibit different brightnesses when a predetermined data voltage is applied, a memory storing a reference brightness that is to be exhibited by the liquid crystal panel when the predetermined data voltage is applied, and a brightness correction unit receiving image data corresponding to the predetermined data voltage and correcting the image data so that the first region and the second region exhibit the reference brightness.

### BRIEF DESCRIPTION OF THE DRAWINGS

Exemplary embodiments of the present invention will be understood in more detail from the following descriptions taken in conjunction with the attached drawings, in which:
FIG. 1 is an exploded perspective view illustrating a liquid crystal display according to an exemplary embodiment of the present invention;
FIG. 2 is a view illustrating brightness correction of image data according to an exemplary embodiment of the present invention;
FIG. 3 is a block diagram illustrating a liquid crystal display according to an exemplary embodiment of the present invention;
FIG. 4 is a block diagram illustrating a signal controller according to an exemplary embodiment of the present invention;
FIG. 5 is a block diagram illustrating a brightness correction unit according to an exemplary embodiment of the present invention;
FIG. 6 is a view illustrating a method of correcting image data according to an exemplary embodiment of the present invention;
FIG. 7 is a view illustrating dithering and frame rate control according to an exemplary embodiment of the present invention;
FIG. 8 is a view illustrating brightness correction of image data according to an exemplary embodiment of the present invention; and
FIG. 9 is a view illustrating brightness correction of image data according to still an exemplary embodiment of the present invention.

### DETAILED DESCRIPTION OF EXEMPLARY EMBODIMENTS

Advantages and features of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those of ordinary skill in the art, and the present invention will only be defined by the appended claims. Like reference numerals refer to like elements throughout the specification.

A liquid crystal display according to exemplary embodiments of the present invention will now be described more fully with reference to the accompanying drawings, in which the exemplary embodiments of the invention are shown.

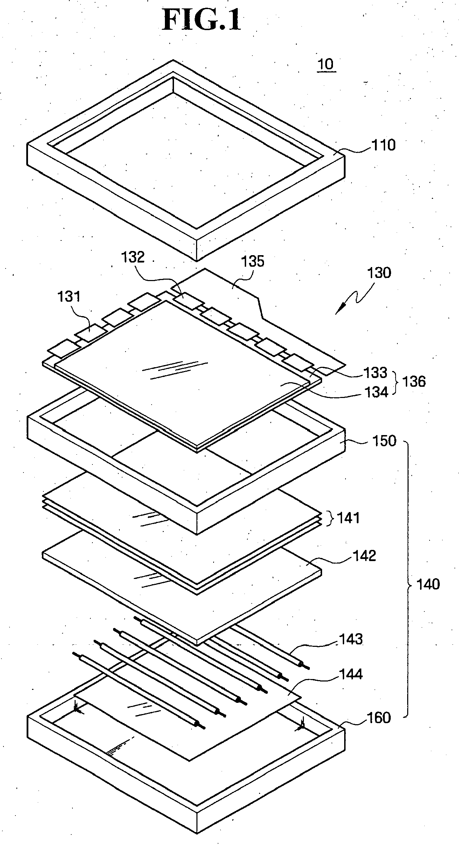

FIG. 1 is an exploded perspective view illustrating a liquid crystal display according to an exemplary embodiment of the present invention.

Referring to FIG. 1, a liquid crystal display 10 includes a liquid crystal panel assembly 130, a backlight assembly 140, and an upper housing 110.

The liquid crystal panel assembly 130 includes a liquid crystal panel 136 including a Thin Film Transistor (TFT) panel 133 and a common electrode panel 134, liquid crystals (not shown), gate tape carrier packages 131, data tape carrier packages 132, and a printed circuit board 135.

In the liquid crystal panel 136, the TFT panel 133 includes gate lines (not shown), data lines (not shown), an array of TFTs (not shown), pixel electrodes (not shown), etc. The common electrode panel 134 includes black matrices (not shown), a common electrode (not shown), etc., and is disposed opposite to the TFT panel 133.

The gate tape carrier packages 131 are respectively connected to the gate lines in the TFT panel 133, and the data tape carrier packages 132 are respectively connected to the data lines in the TFT panel 133.

Various driving devices for processing gate driving signals and data driving signals are mounted on the printed circuit board 135 so that the gate driving signals and the data driving signals are input to the gate tape carrier packages 131 and the data tape carrier packages 132, respectively.

The backlight assembly 140 includes optical sheets 141, an optical plate 142, lamps 143, and a reflective plate 144. The lamps 143 may be LEDs (Light Emitting Diodes), CCFLs (Cold Cathode Fluorescent Lamps), EEFLs (External Electrode Fluorescent Lamps), and the like. The lamps 143 generate light by a lamp driving voltage applied to the lamps 143 from an external source (not shown). The lamps 143 are spaced apart from each other by a predetermined distance and positioned in parallel to each other at the same spacing. The lamps 143 may form a direct-type lamp structure. In order to achieve brightness uniformity by uniformly distributing a discharge gas in the lamps 143, the lamps 143 may be arranged horizontally with respect to the liquid crystal panel 136.

The optical plate 142 may be disposed on the lamps 143 and serves to enhance the brightness uniformity of light generated from the lamps 143.

The reflective plate 144 is disposed below the lamps 143 and reflects light upward from below the lamps 143. The reflective plate 144 may be formed integrally with the bottom surface of a lower housing 160. That is, if the lower housing 160 is made of a highly reflective material such as aluminum (Al) or aluminum alloy, the inner surface of the lower housing 160 itself can serve as the reflective plate 144.

The optical sheets 141 are disposed on the optical plate 142 and serve to diffuse and focus light coming from the lamps 143. The optical sheets 141 include a diffusion sheet, a first prism sheet, a second prism sheet, and so on.

The diffusion sheet is disposed above the lamps 143 and serves to enhance the brightness and uniformity of incident light from the lamps 143.

The first prism sheet is disposed on the diffusion sheet. Pyramidal prisms (not shown) are uniformly arranged on a surface of the first prism sheet to focus light diffused from the diffusion sheet and to output the focused light. For example, the first prism sheet may be a brightness enhancement film (BEF-™, manufactured by 3M).

The second prism sheet is disposed on the first prism sheet, and is a multi-layered, reflective, polarization prism sheet for focusing, polarizing, and outputting light. For example, the second prism sheet may be a dual brightness enhancement film (DBEF™, manufactured by 3M). If the first prism sheet can guarantee sufficient brightness and viewing angle, the second prism sheet may be omitted.

The backlight assembly 140 includes a receiving frame 150 and the lower housing 160 for receiving the optical sheets 141, the optical plate 142, the lamps 143, and the reflective plate 144.

The liquid crystal panel assembly 130 is disposed on the optical sheets 141, and is received in the lower housing 160 in a state in which it is supported by the receiving frame 150. The receiving frame 150 has sidewalls formed along its rectangular-shaped edges. The receiving frame 150 is constructed such that the liquid crystal panel assembly 130 can be supported by stepped portions or protrusions formed inside the sidewalls. The lower housing 160 has sidewalls formed along edges of its rectangular-shaped upper surface, and securely receives the backlight assembly 140 and the liquid crystal panel assembly 130 in an area defined by the sidewalls. The lower housing 160 also serves to prevent the bending of the optical sheets 141. The printed circuit board 135 of the liquid crystal panel assembly 130 is folded along an outer edge of the lower housing 160 so that it is disposed on a sidewall or a rear surface of the lower housing 160. The lower housing 160 can have a variety of shapes, depending on how the backlight assembly 140 or the liquid crystal panel assembly 130 is placed in the lower housing 160.

The lower housing 160 is coupled to the upper housing 110 so that an upper surface of the liquid crystal panel assembly 130 received in the lower housing 160 is covered. A window (not shown) for exposing the liquid crystal panel assembly 130 to the outside is disposed on an upper surface of the upper housing 110.

The upper housing 110 may be combined with the lower housing 160 by, but not limited to, a hook or screw connection method. Alternatively, the combining method of the upper housing 110 and the lower housing 160 may be modified in various manners.

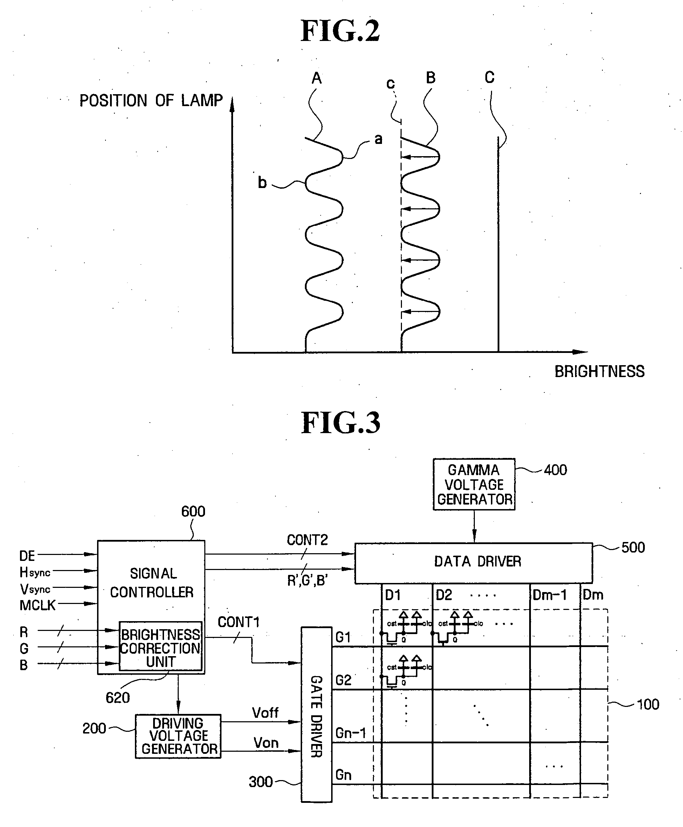

FIG. 2 is a view illustrating brightness correction of image data according to an exemplary embodiment of the present invention.

When a constant data voltage is applied across a liquid crystal panel, the liquid crystal panel must show uniform brightness. In direct-type liquid crystal displays (see FIG. 1), however, as indicated by curve A in FIG. 2, the brightness **a** of predetermined regions of a liquid crystal panel corresponding to regions where lamps (see 143 of FIG. 1) are located is higher than the brightness **b** of other regions of the liquid crystal panel corresponding to spaces between the lamps, thereby resulting in brightness non-uniformity of the liquid crystal panel.

In this regard, in exemplary embodiments of the present invention, as indicated by curve B in FIG. 2, image data in the predetermined regions of the liquid crystal panel corresponding to regions where the lamps are located are corrected to have a reference brightness **c**. At this time, the reference brightness **c** may be defined as the brightness **b** of the predetermined regions of the liquid crystal panel corresponding to the spaces between the lamps. As a result, as indicated by line C in FIG. 2, the brightness of the predetermined regions of the liquid crystal panel corresponding to the regions where the lamps are located is reduced to that of the predetermined regions of the liquid crystal panel corresponding to the spaces between the lamps, resulting in uniform brightness over the entire area of the liquid crystal panel. Here, A and B indicate the brightness value of the backlight assembly 140 before compensation, and C indicate the brightness value of the backlight assembly 140 after compensation.

FIG. 3 is a block diagram illustrating a liquid crystal display according to an exemplary embodiment of the present invention.

Referring to FIG. 3, a liquid crystal display according to an exemplary embodiment of the present invention includes a liquid crystal panel 100, a driving voltage generator 200, a gate driver 300, a gamma voltage generator 400, a data driver 500, and a signal controller 600.

In an equivalent circuit, the liquid crystal panel 100 includes a plurality of display signal lines G1-Gn and D1-Dm and a plurality of unit pixels that are connected to the display signal lines and arranged in matrix form.

In this exemplary embodiment, the display signal lines G1 - Gn and D1 - Dm include a plurality of gate lines G1-Gn receiving gate signals and a plurality of intersecting data lines D1 - Dm receiving data signals. The gate lines G1 - Gn extend substantially in a row direction and are substantially parallel to each other, while the data lines D1 - Dm extend substantially in a column direction and are substantially parallel to each other.

Each of the plurality of pixels consists of a switching element Q connected to a corresponding one of the plurality of display signal lines G1 - Gn and D1 - Dm, a liquid crystal capacitor Clc and a storage capacitor Cst connected to the switching element Q. If necessary, the storage capacitor Cst may not be formed.

The switching element Q is provided on a thin film transistor (TFT) substrate and has three terminals, a control terminal connected to one of the gate lines G1 - Gn, an input terminal connected to one of the data lines D1 - Dm, and an output terminal connected to both the liquid crystal capacitor Clc and the storage capacitor Cst, if employed.

The liquid crystal capacitor Clc includes a pixel electrode provided on the TFT substrate and a common electrode provided on a color filter substrate. The liquid crystal layer disposed between the two electrodes functions as a dielectric of the liquid crystal capacitor Clc. The pixel electrode is connected to the switching element Q, and the common electrode is connected to the common voltage Vcom and covers the entire surface of the color filter substrate. The common electrode may be provided on the TFT substrate, and both electrodes may have a bar or stripe shape.

The storage capacitor Cst is defined by the overlap of the pixel electrode and a separate wire (not shown) provided on the TFT substrate and applied with a predetermined voltage such as the common voltage Vcom (separate wire type). Otherwise, the storage capacitor Cst is defined by the overlap of the pixel electrode and its previous gate line via an insulator (previous gate type).

For color display, each pixel can represent its own color by providing one of a plurality of red, green and blue color filters in an area corresponding to the pixel electrode. In this exemplary embodiment, the color filter is provided in the corresponding area of the color filter substrate. Alternatively, the color filters may be provided on or under the pixel electrode on the TFT substrate.

A polarizer or polarizers (not shown) attached to at least one of the TFT substrate and the color filter substrate of the liquid crystal panel 100 convert the light polarization into the light transmittance.

The driving voltage generator 200 generates a plurality of driving voltages. For example, the driving voltage generator 200 generates a gate-on voltage Von, a gate-off voltage Voff, and a common voltage Vcom (not shown).

The gate driver 300 is connected to the gate lines G1-Gn of the liquid crystal panel 100 and provides gate signals to the gate lines G1-Gn, each gate signal being a combination of a gate-on voltage Von and a gate-off voltage Voff.

The gamma voltage generator 400 generates two sets of a plurality of gray voltages related to the transmittance of the pixels. The data voltages in one set have a positive polarity with respect to the common voltage Vcom, while those in the other set have a negative polarity with respect to the common voltage Vcom. The positive-polarity data voltages and negative-polarity data voltages are alternately supplied to the liquid crystal panel 100 during inversion driving, which is well known.

The data driver 500 is connected to the plurality of data lines D1-Dm of the liquid crystal panel 100. The data driver 500 generates gray voltages based on the plurality of voltages supplied from the gamma voltage generator 400, selects the generated gamma voltages, and applies the gamma voltages to each pixel as data signals. The data driver 500 typically includes a plurality of integrated circuits (ICs).

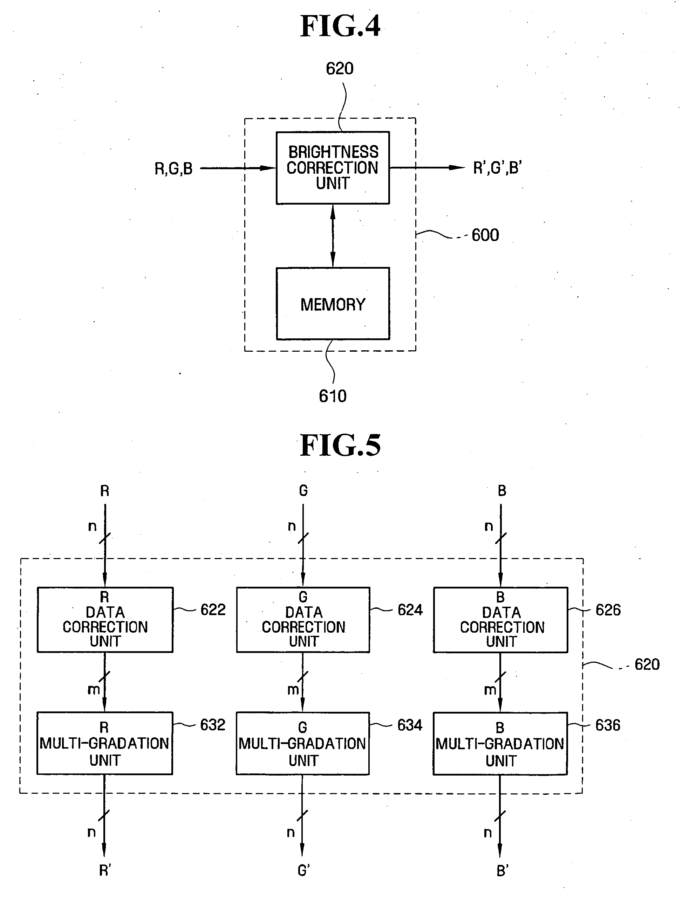

The signal controller 600 generates control signals for controlling the gate driver 300, the data driver 500, and other components, and supplies the control signals to the corresponding components. The signal controller 600 includes a brightness correction unit 620 and provides the image data with uniform brightness supplied to the liquid crystal display. This will be described in more detail with reference to FIG.4

Next, the operation of the LCD will be described in detail.

The signal controller 600 is supplied by an external graphic controller (not shown) with RGB image-signals R, G and B and input control signals controlling the display of the LCD, for example, a vertical synchronization signal V_{sync}, a horizontal synchronization signal H_{sync}, a main clock MCLK, a data enable signal DE, and the like. The signal controller 600 generates a plurality of gate control signals CONT1 and a plurality of data control signals CONT2 and processes the image signals R, G and B for the liquid crystal panel 100 on the basis of the input control signals. The signal controller 600 provides the gate control signals CONT1 to the gate driver 300, the data control signals CONT2 and the processed image signals R', G' and B' to the data driver 500.

The gate control signals CONT1 include a vertical synchronization start signal for indicating the start of a frame, a gate clock signal for controlling the output time of the gate-on voltage Von and an output enable signal for defining the widths of the gate-on voltage Von. The output enable signal and the gate clock signal are supplied to the driving voltage generator 200.

The data control signals CONT2 include a horizontal synchronization start signal for indicating the start of a horizontal period, a load signal for instructing the data driver 500 to apply the appropriate data voltages to the data lines D1-Dm, an inversion control signal for reversing the polarity of the data voltages with respect to the common voltage Vcom, which is abbreviated as a data-voltage polarity, and a data clock signal.

The data driver 500 receives a packet of the image data R', G' and B' for a pixel row from the signal controller 600 in response to the data control signal CONT2 received from the signal controller 600 and converts the image data R', G' and B' into data voltages selected from the gray voltages.

Responsive to the gate control signals CONT1 from the signal controller 600, the gate driver 300 applies the gate-on voltage Von to the gate line G1-Gn, thereby turning on the switching elements Q connected thereto.

While a gate-on voltage Von is applied to one of the gate lines G1-Gn and, thus, switching devices Q of the corresponding row are turned-on (this period is called as "1H" or "1 horizontal period," which denotes a cycle of the horizontal synchronizing signal Hsync, a data enable signal -DE, and a gate clock (CPV)), the -data driver 500 supplies data voltages to corresponding ones of the data lines D1-Dm. The data voltages supplied to the corresponding ones of the data lines D1-Dm are applied to corresponding ones of the unit pixels via the turned-on ones of the switching devices Q.

Liquid crystal molecules are aligned according to the electric field generated between a pixel electrode and a common electrode, and light passing through a liquid crystal layer is polarized accordingly. Such a change in polarization leads to a change in light transmittance that is induced by polarizers (not shown) attached to a TFT substrate and a color filter substrate.

In this manner, during one frame, the gate-on voltage Von is sequentially applied to all the gate lines G1 to Gn, so that the data voltages are applied to all the pixels. When one frame ends, the next frame starts, and a state of the reverse signal applied to the data driver 500 is controlled, so that the polarity of the data signal applied to each of the pixels is opposite to the polarity in the previous frame ("frame inversion"). Instead of the frame inversion, the data driver 5.00 may invert the polarities of the data voltages applied to the adjacent data lines D1 to Dm in one frame, so that the polarities of the pixel voltages of the pixels applied with the data voltages also change, which is referred to as "line inversion". On the other hand, the line inversion may become column inversion, which is referred to as "dot inversion".

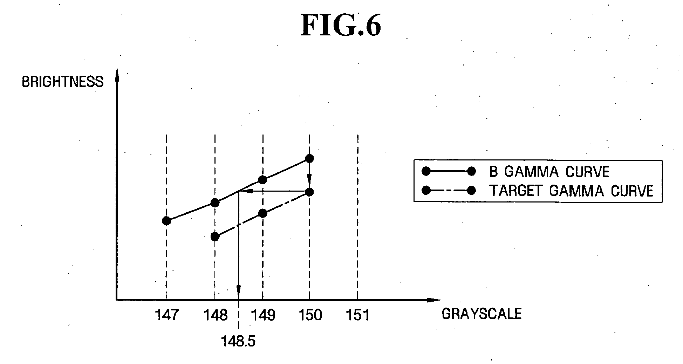

FIG. 4 is a block diagram illustrating a signal controller 600 according to an exemplary embodiment of the present invention, FIG. 5 is a block diagram illustrating a brightness correction unit 620 according to an exemplary embodiment of the present invention, and FIG. 6 is a view illustrating a method of correcting image data according to an exemplary embodiment of the present invention.

Referring to FIGS. 4 and 5, a signal controller 600 according to an exemplary embodiment of the present invention includes a memory 610 and the brightness correction unit 620.

When data voltages corresponding to image data R, G, and B are applied, the memory 610 stores a reference brightness that is to be exhibited by a liquid crystal panel (see 100 of FIG. 3). In this exemplary embodiment, the reference brightness may be defined as the brightness (see a of FIG. 2) of predetermined regions of a liquid crystal panel corresponding to regions where lamps are located or the brightness (see b of FIG. 2) of predetermined regions of the liquid crystal panel corresponding to spaces between the lamps. The memory 610 may be disposed inside the signal controller 600. The memory 610 may also be disposed outside the signal controller 600. The memory 610 may be a Read-Only Memory (ROM).

As shown in FIG. 5, the brightness correction unit 620 includes an R data correction unit 622, a G data correction unit 624, a B data correction unit 626, and R, G, and B multi-gradation units 632, 634, and 636 connected to the R, G, and B data correction portions 622, 624, and 626, respectively.

The R, G, and B data correction portions 622, 624, and 626 convert the n-bit image data R, G, and B supplied from an external source (not shown) to predetermined m-bit image data according to the reference brightness stored in the memory 610 and then outputs the m-bit image data to the R, G, and B multi-gradation units 632, 634, and 636, respectively:

The R, G, and B multi-gradation units 632, 634, and 636 convert the m-bit (m>n) image data to n-bit image data R', G', and B' , and then supply the n-bit image data R', G', and B' to the data driver 500. In this exemplary embodiment, the R, G, and B multi-gradation units 632, 634, and 636 perform time-based dithering and frame rate control. The R, G, and B multi-gradation units 632, 634, and 636 may be provided as a single multi-gradation unit.

Referring to FIG. 6, in order to reduce the brightness of B image data corresponding to a 150-grayscale to a desired level, the B image data of a grayscale corresponding to the desired brightness level must be input. That is, when the B image data corresponding to a 148.5-grayscale is input, a desired brightness can be obtained. Thus, a 150-grayscale B image data input from an external source must be corrected to a 148.5-grayscale B image data through a B data correction unit(see 626 of FIG. 5). When 8-bit image data are input, however, 148.5-grayscale image data cannot be expressed. In this case, image data having a greater number of bits than 8 bits must be used. For example, if 10-bit data is used, 148.5-grayscale image data may correspond to 594(=148.5×4)-grayscale image data.

Referring again to FIGS. 3 and 5, image data supplied to the data driver 500 are expressed as n-bit data or slightly less than n-bit data. Thus, the R, G, and B multi-gradation units 632, 634, and 636 perform spatial dithering and time frame rate control for m-bit image data and then supply the dithered and frame rate controlled image data to the data driver 500.

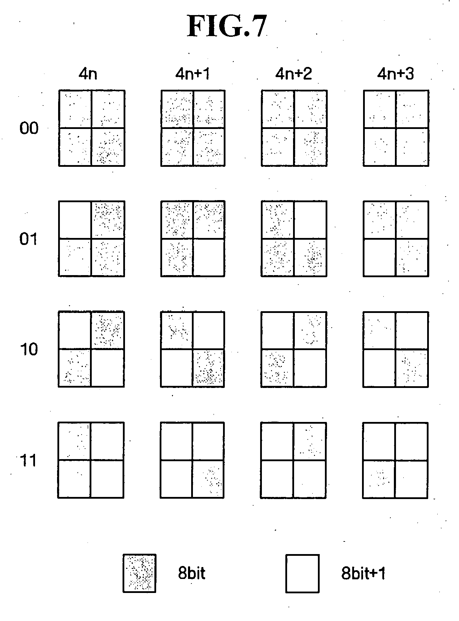

FIG. 7 is an illustration of dithering and frame rate control according to an exemplary embodiment of the present invention.

Referring to FIG. 7, 10-bit image data may be divided into upper 8-bit data and lower 2-bit data. The lower 2-bit data is "00", "01", "10"; or "11". For example, in order for lower 2-bit data to be set to "00", all of the four adjacent pixels are expressed as upper 8-bit data. In order for lower 2-bit data to be set to "01", one of the four adjacent pixels is expressed as upper 8-bit+1 data. In this case, in the four pixels, lower 2-bit data is set to "01" on average. At this time, in order to avoid flicker, the position of a pixel corresponding to the upper 8-bit+1 data can be shifted according to frames, as shown in FIG. 7.

Similarly, in order for lower 2-bit to be set to "10", two of the four adjacent pixels are expressed as upper 8-bit+1 data. In order for the lower 2-bit to be set to "11", three of the four adjacent pixels are expressed as upper 8-bit+1 data. In this case, as described above, in order to avoid flicker, the position of a pixel corresponding to upper 8-bit+1 data can be shifted according to frames. FIG. 7 illustrates that the position of a pixel corresponding to the upper 8-bit+1 data being shifted according to 4n, 4n+1, 4n+2, and 4n+3 frames.

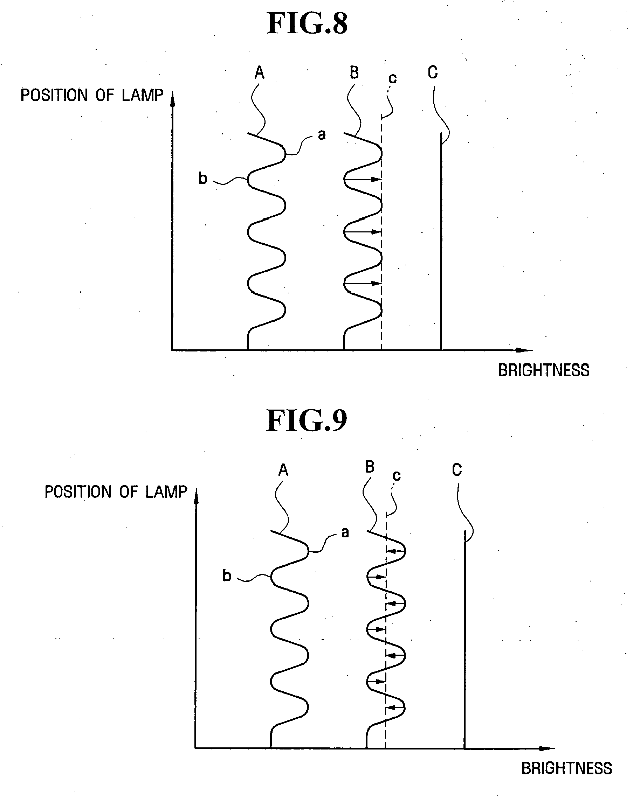

FIG. 8 is a view illustrating brightness correction of image data according to an exemplary embodiment of the present invention.

Referring to FIG. 8, when a constant data voltage is applied to a liquid crystal panel (see 100 of FIG. 3), the liquid crystal panel must show uniform brightness. In direct-type liquid crystal displays (see FIG. 1), however, as indicated by curve A in FIG. 8, the brightness a of predetermined regions of a liquid crystal panel corresponding to regions where lamps are located (see 143 of FIG. 1) is higher than the brightness b of predetermined regions of the liquid crystal panel corresponding to spaces between the lamps, thereby resulting in non-uniform brightness of the liquid crystal panel.

In this regard, in the exemplary embodiment of the present invention, as indicated by curve B in FIG. 8, image data in the predetermined regions of the liquid crystal panel corresponding to the spaces between the lamps are corrected to have a reference brightness c. At this time, the reference brightness c may be defined as the brightness a of the predetermined regions of the liquid crystal panel corresponding to the regions where the lamps are located.

As a result, as indicated by line C in FIG. 8, the brightness of the predetermined regions of the liquid crystal panel corresponding to the spaces between the lamps is equalized to that of the predetermined regions of the liquid crystal panel corresponding to the regions where the lamps are located, thereby resulting in uniform brightness over the entire area of the liquid crystal panel. Here, A and B indicate the brightness value of the backlight assembly 140 before compensation, and C indicate the brightness value of the backlight assembly 140 after compensation.

The signal controller 600 according to the exemplary embodiment of the present invention has substantially the same structure as the signal controller according to the exemplary embodiment described in relation to FIG. 4. A method of correcting image data according to the exemplary embodiment of the present invention may be performed in the same manner as described above with reference to FIG. 6 and, thus, a description thereof will be omitted.

The signal controller 600 used for brightness correction of image data according to the exemplary embodiment of the present invention includes a memory (see 610 of FIG. 4) and a brightness correction unit (see 620 of FIG. 4).

When data voltages corresponding to image data (see R, G, and B of FIG. 4) are applied, the memory stores a reference brightness that is to be exhibited by a liquid crystal panel (see 100 of FIG. 3). In this exemplary embodiment, the reference brightness may be defined by brightness (see a of FIG. 8) of predetermined regions of a liquid crystal panel corresponding to regions where lamps are located or brightness (see b of FIG. 8) of predetermined regions of the liquid crystal panel corresponding to spaces between the lamps.

The brightness correction unit includes an R data correction unit(see 622 of FIG. 5), a G data correction unit(see 624 of FIG. 5), a B data correction unit(see 626 of FIG. 5), and R, G, and B multi-gradation units (see 632, 634, and 636 of FIG. 5) connected to the R, G, and B data correction portions 622, 624, and 626, respectively.

The R, G, and B data correction portions convert n-bit image data (see R, G, and B of FIG. 5) supplied from an external source to predetermined m-bit image data according to the reference brightness stored in the memory and then outputs the m-bit image data to the R, G, and B multi-gradation units, respectively.

The R, G, and B multi-gradation units convert the m-bit (m>n) image data to n-bit image data (see R', G', and B' of FIG. 5) and then supply the n-bit image data to the signal controller 600. In this exemplary embodiment, the R, G, and B multi-gradation units perform time-based dithering and frame rate control. The R, G, and B multi-gradation units may be provided as a single multi-gradation unit.

As described above, a method of correcting image data according to the exemplary embodiment of the present invention may be performed in the same manner as described above with reference to FIG. 6 and, thus, a description thereof will be omitted.

FIG. 9 is a view illustrating brightness correction of image data according to an exemplary embodiment of the present invention.

Referring to FIG. 9, when a constant data voltage is applied to a liquid crystal panel (see 100 of FIG. 3), the liquid crystal panel must show uniform brightness. In direct-type liquid crystal displays (see FIG. 1), however, as indicated by curve A in FIG. 9, the brightness a of predetermined regions of a liquid crystal panel corresponding to regions where lamps are located (see 143 of FIG. 1) is different from the brightness b of predetermined regions of the liquid crystal panel corresponding to spaces between the lamps, thereby resulting in non-uniform brightness of the liquid, crystal panel.

In this regard, in the exemplary embodiment of the present invention, as indicated by curve B in FIG. 9, image data in the predetermined regions of the liquid crystal panel corresponding to the regions where the lamps are located and image data in the predetermined regions of the liquid crystal panel corresponding to the spaces between the lamps are corrected to have a reference brightness c. In this exemplary embodiment, the reference brightness c may be defined to be higher than the brightness b of the predetermined regions of the liquid crystal panel corresponding to the spaces between the lamps and lower than the brightness a of the predetermined regions of the liquid crystal panel corresponding to the regions where the lamps are located. As a result, as indicated by line C in FIG. 9, the brightness of the predetermined regions of the liquid crystal panel corresponding to the regions where the lamps are located is equalized to that of the predetermined regions of the liquid crystal panel corresponding to the spaces between the lamps, thereby resulting in uniform brightness over the entire area of the liquid crystal panel. Here, A and B indicate the brightness value of the backlight assembly 140 before compensation, and C indicate the brightness value of the backlight assembly 140 after compensation.

The signal controller 600 according to the exemplary embodiment of the present invention has substantially the same structure as the signal controller according to the exemplary embodiment described in relation to FIG. 4. A method of correcting image data according to the exemplary embodiment of the present invention may be performed in the same manner as described above with reference to FIG. 6 and, thus, a description thereof will be omitted.

The signal controller 600 used for brightness correction of image data according to the exemplary embodiment of the present invention includes a memory (see 610 of FIG. 4) and a brightness correction unit (see 620 of FIG. 4).

When data voltages corresponding to image data (see R, G, and B of FIG. 4) are applied, the memory stores a reference brightness that is to be exhibited by a liquid crystal panel (see 100 of FIG. 3). In this exemplary embodiment, the reference brightness may be defined to be higher than the brightness (see **b** of FIG. 9) of predetermined regions of the liquid crystal panel corresponding to spaces between lamps and lower than the brightness (see a of FIG. 9) of predetermined regions of the liquid crystal panel corresponding to the regions where the lamps are located.

The brightness correction unit includes an R data correction unit(see 622 of FIG. 5), a G data correction unit(see 624 of FIG. 5), a B data correction unit(see 626 of FIG. 5), and R, G, and B multi-gradation units (see 632, 634, and 636 of FIG. 5) connected to the R, G, and B data correction portions, respectively.

The R, G, and B data correction portions convert n-bit image data (see R, G, and B of FIG. 5) supplied from an external source to predetermined m-bit image data according to the reference brightness stored in the memory and then output the m-bit image data to the R, G, and B multi-gradation units, respectively.

The R, G, and B multi-gradation units convert m-bit (m>n) image data to n-bit image data (see R', G', and B' of FIG. 5) and then supply the n-bit image data to the signal data driver 500. In this exemplary embodiment, the R, G, and B multi-gradation units perform time-based dithering and frame rate control. The R, G, and B multi-gradation units may be provided as a single multi-gradation unit.

The liquid crystal displays according to the above-described exemplary embodiments of the present invention provide one or more of following advantages.

First, a brightness correction unit is disposed in a signal controller, thereby achieving brightness uniformity over the entire area of a liquid crystal panel.

Second, there is no need to maintain a predetermined gap between lamps and a diffusion plate, thereby decreasing the length of a driving chip package connecting a printed circuit board and a liquid crystal panel, resulting in a reduction in the manufacturing costs of the liquid crystal displays.

Third, there is no need to maintain a predetermined gap between lamps and a diffusion plate, thereby preventing the sagging of the diffusion plate.

While the present invention has been particularly shown and described with reference to exemplary embodiments thereof, it will be understood by those of ordinary skill in the art that various changes in form and details may be made therein without departing from the spirit and scope of the present invention as defined by the following claims. It is therefore desired that the exemplary embodiments be considered in all respects as illustrative and not restrictive, reference being made to the appended claims rather than the foregoing description to indicate the scope of the invention.

## Claims

1. A liquid crystal display comprising:
a liquid crystal panel comprising a first region and a second region that exhibit different brightnesses when a predetermined data voltage is applied;
a memory storing a reference brightness that is to be exhibited by the liquid crystal panel when the predetermined data voltage is applied; and
a brightness correction unit receiving image data corresponding to the predetermined data voltage and correcting the image data so that the first region and the second region exhibit the reference brightness stored in the memory.

2. The liquid crystal display of claim 1, wherein the reference brightness is the brightness of the first region.

3. The liquid crystal display of claim 2, wherein the brightness of the second region is higher than the brightness of the first region, and the brightness correction unit corrects image data corresponding to the second region so that the second region exhibits the brightness of the first region.

4. The liquid crystal display of claim 3, wherein the brightness correction unit comprises:
a data extension unit extending n-bit image data to m-bit image data; and
a data reduction unit reducing the m-bit image data to n-bit image data.

5. The liquid crystal display of claim 4, wherein the data reduction unit performs dithering and frame rate control.

6. The liquid crystal display of claim 1, wherein the reference brightness is the brightness of the second region.

7. The liquid crystal display of claim 6, wherein the brightness of the first region is lower than the brightness of the second region, and the brightness correction unit corrects image data corresponding to the first region so that the first region exhibits the brightness of the second region.

8. The liquid crystal display of claim 6, wherein the brightness correction unit comprises:
a data extension unit extending n-bit image data to m-bit image data; and
a data reduction unit reducing the m-bit image data to n-bit image data.

9. The liquid crystal display of claim 8, wherein the data reduction unit performs dithering and frame rate control.

10. The liquid crystal display of claim 1, wherein the reference brightness is higher than the brightness of the first region and lower than the brightness of the second region.

11. The liquid crystal display of claim 10, wherein the brightness correction unit corrects the image data so that the first region and the second region exhibit the reference brightness.

12. The liquid crystal display of claim 11, wherein the brightness correction unit comprises:
a data extension unit extending n-bit image data to m-bit image data; and
a data reduction unit reducing the m-bit image data to n-bit image data.

13. The liquid crystal display of claim 12, wherein the data reduction unit performs dithering and frame rate control.
